(19) Europäisches Patentamt
European Patent Office
Office européen des brevets

(11) Veröffentlichungsnummer : **0 145 656**
**B1**

(12) # EUROPÄISCHE PATENTSCHRIFT

(45) Veröffentlichungstag der Patentschrift : **13.12.89**

(51) Int. Cl.$^4$ : **C 09 B 23/16**, D 06 P 3/76, D 06 P 3/32, D 21 H 3/80

(21) Anmeldenummer : **84810549.0**

(22) Anmeldetag : **12.11.84**

(54) **Kationische Verbindungen.**

(30) Priorität : **16.11.83 CH 6155/83**

(43) Veröffentlichungstag der Anmeldung : **19.06.85 Patentblatt 85/25**

(45) Bekanntmachung des Hinweises auf die Patenterteilung : **13.12.89 Patentblatt 89/50**

(84) Benannte Vertragsstaaten : **CH DE FR GB LI**

(56) Entgegenhaltungen :
**EP-A- 0 038 299**
**EP-A- 0 074 926**

(73) Patentinhaber : **CIBA-GEIGY AG**
**Klybeckstrasse 141**
**CH-4002 Basel (CH)**

(72) Erfinder : **Stingelin, Willy, Dr.**
**Stockackerstrasse 1A**
**CH-4153 Reinach (CH)**
Erfinder : **Adam, Jean-Marie, Dr.**
**Rue de Village Neuf 60 D**
**F-68300 Rosenau (FR)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 145 656 B1

**Beschreibung**

Die Erfindung betrifft neue kationische Verbindungen, Verfahren zu deren Herstellung sowie deren Verwendung als Farbstoffe zum Färben und Bedrucken von Textilmaterialien, Leder und vor allem Papier.

Die neuen kationischen Verbindungen entsprechen der Formel I

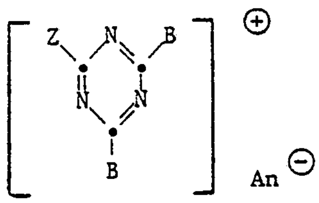

worin bedeuten Z einen Rest der Formel

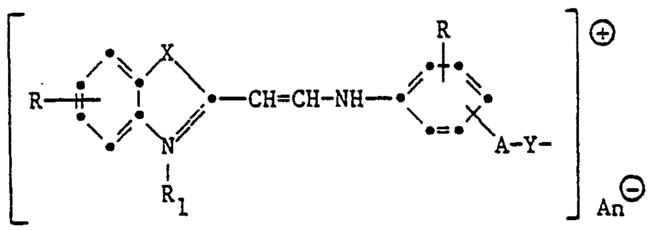

eines der beiden B entweder die Bedeutung von Z oder einen nichtkationischen Rest der Formel

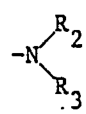

und das andere der beiden B einen identischen oder verschiedenen nichtkationischen Rest der Formel

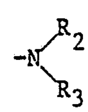

R unabhängig voneinander Wasserstoff, gegebenenfalls substituiertes $C_1$-$C_4$-Alkyl, gegebenenfalls substituiertes $C_1$-$C_4$-Alkoxy, die $NO_2$-Gruppe, gegebenenfalls substituiertes Acylamino, Halogen oder die CN-Grupppe ;

X ein Schwefelatom oder die Gruppe

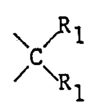

wobei beide Reste $R_1$ auch miteinander zu einem carbocyclischen 5- oder 6-Ring verknüpft sein können ;

A die direkte Bindung, —NH—alkylen ($C_1$-$C_4$), —O—alkylen ($C_1$-$C_4$), Alkylen ($C_1$-$C_4$), Phenylen, —O—phenylen oder —NH—phenylen ;

Y —NH—, —$NR_1$—, —O— oder —S— ;

$R_1$ unabhängig voneinander gegebenenfalls substituiertes $C_1$-$C_4$-Alkyl oder $C_3$-$C_4$-Alkenyl ;

$R_2$ einen gegebenenfalls substituierten Arylrest oder einen gegebenenfalls substituierten Heterocyclus,

$R_3$ Wasserstoff, einen gegebenenfalls substituierten $C_1$-$C_6$-Alkylrest oder einen gegebenenfalls substituierten $C_1$-$C_6$-Alkenylrest, und

An ein Anion.

R in der Bedeutung einer gegebenenfalls substituierten $C_1$-$C_4$-Alkylgruppe stellt eine unverzweigte oder verzweigte Alkylgruppe dar wie z. B. eine Methyl-, Aethyl-, n- oder iso-Propyl- oder n-, sec- oder tert.Butylgruppe ; diese Gruppen können substituiert sein z. B. durch eine $C_1$-$C_4$-Alkoxygruppe wie die Methoxy-, Aethoxy-, n- und iso-Propoxygruppe oder n- und iso-Butoxygruppe ; durch CN, durch Halogen wie Fluor, Chlor oder Brom, durch Phenyl (seinerseits gegebenenfalls weitersubstituiert durch z. B.

Halogen, Alkyl und/oder Alkoxy) durch $CONH_2$ oder durch eine am N-Atom mono- oder disubstituierte (z. B. durch $C_1$-$C_4$-Alkyl) Carbonsäureamidgruppe.

Bedeutet R eine gegebenenfalls substituierte $C_1$-$C_4$-Alkoxygruppe so handelt es sich um eine unverzweigte oder verzweigte Alkoxygruppe wie z. B. um die Methoxy-, Aethoxy-, n- und iso-Propoxy- oder n- und iso-Butoxygruppe welche Gruppen weitersubstituiert sein können, beispielsweise durch Phenyl.

Handelt es sich bei R um eine Acylaminogruppe, so kommt z. B. die Benzoylamino- oder Acetylaminogruppe in Frage. Die Acylaminogruppe kann substituiert sein durch z. B. Halogen wie Fluor, Chlor oder Brom oder durch eine $NH_2$-Gruppe oder durch eine am N-Atom durch beispielsweise $C_1$-$C_4$-Alkyl mono- oder disubstituierte Aminogruppe.

Bedeutet R ein Halogenatom so handelt es sich vor allem um das Fluor, Chlor oder Bromatom.

Es ist aber auch möglich, dass der Substituent R mehrmals in ein und demselben Benzolring vorkommen kann.

In den bevorzugten kationischen Verbindungen der Formel I bedeutet R Wasserstoff oder eine unsubstituierte, unverzweigte $C_1$-$C_4$-Alkylgruppe, insbesondere die Methylgruppe oder eine unsubstituierte, unverzweigte Alkoxygruppe, vor allem die Methoxygruppe oder Halogen, insbesondere Chlor.

Bedeutet $R_1$ eine gegebenenfalls substituierte $C_1$-$C_4$-Alkylgruppe, so handelt es sich um eine unverzweigte oder verzweigte Alkylgruppe wie z. B. um die Methyl-, Aethyl-, n- und iso-Propyl- oder n- und iso-Butylgruppe ; diese Gruppen können substituiert sein beispielsweise durch $C_1$-$C_4$-Alkoxy (unverzweigt und verzweigt wie Methoxy-, Aethoxy-, n- und iso-Propoxy) durch CN oder Halogen (Fluor, Chlor oder Brom) durch gegebenenfalls $C_1$-$C_4$-Alkyl oder Halogen substituiertes Phenyl oder durch die $CONH_2$-Gruppe. Bedeutet $R_1$ eine Alkenylgruppe so kommt beispielsweise die Allylgruppe in Frage.

In den bevorzugten kationischen Verbindungen der Formel I bedeutet $R_1$ eine unsubstituierte, unverzweigte $C_1$-$C_4$-Alkylgruppe, vor allem die $CH_3$-Gruppe.

Bedeutet X die

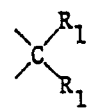

-Gruppierung, wo beide Reste $R_1$ miteinander zu einem carbocyclischen 5- oder 6-Ring verknüpft sein können, so handelt es sich vor allem um den unsubstituierten Cyclopentan- oder Cyclohexanring.

In den bevorzugten kationischen Verbindungen der Formel I bedeutet X die

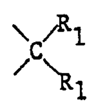

-Gruppierung, worin $R_1$ je einen unverzweigten, unsubstituierten $C_1$-$C_4$-Alkylrest darstellt, insbesondere bedeutet X die

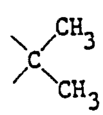

Gruppierung.

Bedeutet A eine —alkylen ($C_1$-$C_4$)-, —NH—alkylen ($C_1$-$C_4$)- oder —O—alkylen ($C_1$-$C_4$)-Brücke so kommen als « alkylen » Brücken beispielsweise die Methylen-, Aethylen-, n- und iso-Propylen oder n- und iso-Butylenbrücke in Frage.

In den bevorzugten kationischen Verbindungen der Formel I ist A in m- oder p-Stellung zur —CH = CH—NH-Brücke gebunden und bedeutet entweder die direkte Bindung oder —O—Phenylen— oder —NH—Phenylen.

Y in der Bedeutung einer $—NR_1$-Gruppe stellt eine —N-alkyl ($C_1$-$C_4$)-Gruppe dar wie die $—N \cdot CH_3—$, $—N \cdot C_2H_5—$, $—N \cdot C_3H_7$-Gruppe, wo der Alkylrest noch definitionsgemäss substituiert sein kann, vor allem durch CN oder Halogen.

In den bevorzugten kationischen Verbindungen der Formel I bedeutet Y die —NH— oder $—NR_1$-Gruppe, insbesondere die $—N \cdot CH_3$-Gruppe.

$R_2$ in der Bedeutung von Aryl stellt beispielsweise Phenyl oder Naphthyl dar und in der Bedeutung eines Heterocyclus einen 5- oder 6-gliedrigen Heterocyclus wie beispielsweise Thiazol, Imidazol, Pyrazol, Triazol, Piperazin, Pyridin, Piperidin und Morpholin.

Sowohl der Arylrest $R_2$ als auch der Heterocyclus $R_2$ können noch substituiert sein, beispielsweise durch $C_1$-$C_4$-Alkoxy (unverzweigt und verzweigt, wie Methoxy, Aethoxy, n- und iso-Propoxy), $C_1$-$C_4$-Alkyl

(unverzweigt und verzweigt, wie Methyl, Aethyl, n- und iso-Propyl), OH, Halogen (Fluor, Chlor, Brom), $NO_2$, CN, NH, $C_1$-$C_4$-Alkyl, $N(Alkyl)_2$, $[^{\oplus}N(Alkyl)_3]An^{\ominus}$ und $NH_2$.

Bedeutet $R_3$, $C_1$-$C_6$-Alkyl, so kann dieser Alkylrest ein- oder mehrmals unterbrochen sein durch —O—, —S— und/oder —NH— ; dieser Alkylrest kann unverzweigt oder verzweigt sein. Es handelt sich beispielsweise um den Methyl-, Aethyl-, n- und iso-Propyl-, n-, sec- und tert.-Butyl-, n- und iso-Pentyl und n-Hexylrest.

Bedeutet $R_3$, $C_1$-$C_6$-Alkenyl, so handelt es sich beispielsweise um die Reste —$CH_2$—CH = $CH_2$ und —$CH_2$—CH = CH—$CH_3$.

Sowohl der $C_1$-$C_6$-Alkylrest $R_3$ als auch der $C_1$-$C_6$-Alkenylrest $R_3$ können noch substituiert sein ; als Substituenten kommen beispielsweise in Frage : OH, Halogen (Fluor, Chlor, Brom), $NO_2$, CN, NH-Alkyl($C_1$-$C_4$), N(Alkyl $C_1$-$C_4)_2$ und $[^{\oplus}N(Alkyl\ C_1\text{-}C_4)_3]An^{\ominus}$

Bedeutet der in $R_2$ und/oder $R_3$ mögliche Substituent eine $[^{\oplus}N(Alkyl\ C_1\text{-}C_4)_3]An^{\ominus}$-Gruppe, so handelt es sich beispielsweise um folgende Kation-Substituenten :

$-N^{\oplus}(CH_3)_3$,

$-N^{\oplus}(C_2H_5)_3$,

$-N^{\oplus}(iso\text{-}C_3H_7)_3$,

$-N^{\oplus}(n\text{-}C_3H_7)_3$,

$-\overset{\oplus}{N}H(CH_3)_2$,

$-\overset{\oplus}{N}H(C_2H_5)_2$,

$-\overset{\oplus}{N}H(n\text{-}C_3H_7)_2$,

$-\overset{\oplus}{N}H(iso\text{-}C_3H_7)_2$,

$-\overset{\oplus}{N}H(n\text{-}C_4H_9)_2$,

$-\overset{\oplus}{N}H(tert.\text{-}C_4H_9)_2$,

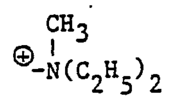

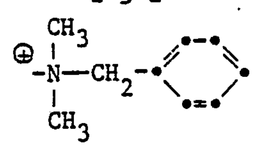

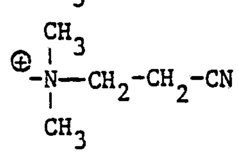

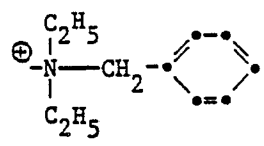

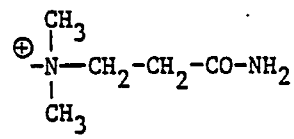

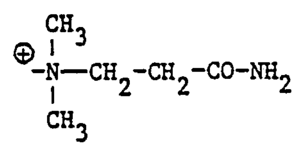

$-\overset{\oplus}{N}(C_2H_4OCH_3)_3$ ,

$-\overset{\oplus}{N}(C_2H_4CN)_3$ ,

$-\overset{\oplus}{N}(CH_2COOH)_3$ ,

$-\overset{\oplus}{N}(C_4H_8CONH_2)_3$ .

In bevorzugten kationischen Verbindungen der Formel I bedeutet eines der beiden B die Gruppe der Formel

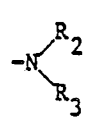

worin $R_2$ Phenyl und $R_3$ $C_1$-$C_4$-Alkyl, insbesondere $CH_3$, bedeutet und das andere B hat die Bedeutung von Z.

Zur Klarstellung sei hervorgehoben, dass für den Fall wenn eines der beiden B die Bedeutung von Z hat, es sich um symmetrische als auch um assymmetrische Verbindungen handeln kann. Für den Fall, dass beide B einen Aminrest der Formel

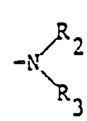

bedeuten, so können auch hier diese beiden Aminreste identisch oder voneinander verschieden sein. Zudem können die Substituenten $R_2$ und $R_3$ wie dargelegt durch Kationische Gruppen substituiert sein, so dass Verbindungen der Formel I resultieren, die mehrere Kationische Gruppen aufweisen. Die Schreibweise der Formel I bringt also lediglich zum Ausdruck, dass es sich um Kationische Verbindungen handelt, unabhängig von der Anzahl der Kationischen Gruppen.

Als Anionen An kommen sowohl anorganische wie organische Anionen in Frage ; beispielsweise sind genannt : Halogen, wie Chlorid-, Bromid- oder Jodid-, Tetrafluorborat, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Formiat, Acetat-, Propionat-, Lactat-, Succinat, Chloroacetat-, Tartrat-, Methansulfonat- oder Benzoationen oder komplexe Anionen wie das von Chlorzinkdoppelsalzen.

Bevorzugte Anionen An sind das Formiat-, Acetat-, Lactat, Chlorid-, Sulfat- und Phosphation.

Die neuen kationischen Verbindungen der Formel I können nach bekannter Art und Weise hergestellt werden.

Beispielsweise erhält man die Verbindungen der Formel I, worin ein B die Bedeutung von Z hat derart, dass man 1 Mol eines Diamins der Formel II

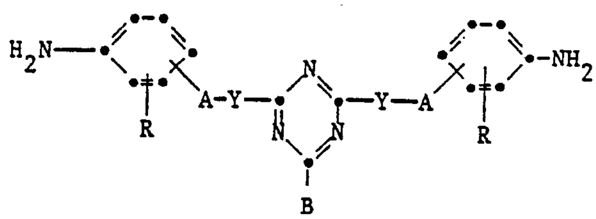

(II)

mit 2 Mol einer Aldehydverbindung der Formel III

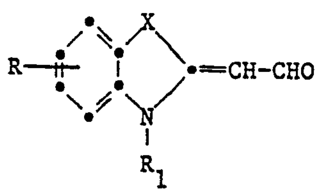

(III)

in Gegenwart einer Säure HAn kondensiert.

Diejenigen Verbindungen der Formel I worin beide B die Bedeutung der Formel

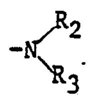

darstellen werden beispielsweise erhalten, indem man eine Verbindung der Formel

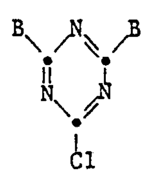

(IV)

mit einer Verbindung der Formel

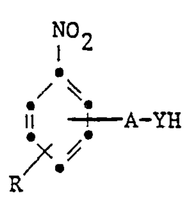

(V)

zu einer Verbindung der Formel

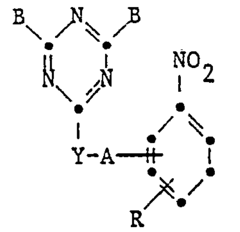

(VI)

umsetzt, anschliessend die $NO_2$-Gruppe zur $NH_2$-Gruppe reduziert und mit 1 Mol einer Aldehydverbindung der Formel III in Gegenwart einer Säure HAn kondensiert, wobei die Symbole R, A, Y, B, $R_1$ und X gleich oder voneinander verschieden sein können und die unter Formel I angegebene Bedeutung haben.

Die Diamine der Formel II und die Aldehydverbindungen der Formel III sind bekannt oder können nach bekannten Methoden hergestellt werden. Beispielsweise erhält man die Diamine der Formel II derart, dass man im sym. Trichlortriazin die Chloratome stufenweise mit Verbindungen der Formel

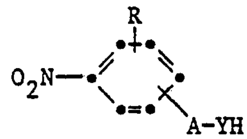

und mit B-H umsetzt und anschliessend im Kondensationsprodukt die $NO_2$-Gruppe zur $NH_2$-Gruppe reduziert.

Als Aldehydverbindungen der Formel III kommen z. B. in Frage :
1,3,3-Trimethyl-2-methylen-indolin-ω-aldehyd,
1,3,3-Trimethyl-5-chlor-2-methylen-indolin-ω-aldehyd,
1,3,3-Trimethyl-5-phenyl-2-methylen-indolin-ω-aldehyd und
1,3,3-Trimethyl-5-cyan-2-methylen-indolin-ω-aldehyd.

Die Kondensationsreaktion z. B. des Diamins der Formel II mit der Aldehydverbindung der Formel III erfolgt nach bekannter Art und Weise, z. B. in wässrigem Medium bei einer Temperatur von etwa 0° bis 100 °C in Gegenwart einer Säure HAn. Bei dieser Säure HAn handelt es sich um eine organische Säure, wie Essigsäure oder Arylsulfonsäure, vor allem Benzolsulfonsäure oder um eine anorganische Säure, wie Salzsäure, Schwefelsäure oder Phosphorsäure.

Nach der Kondensationsreaktion werden die neuen kationischen Verbindungen gegebenenfalls vom Reaktionsmedium getrennt und getrocknet. Falls gewünscht oder erforderlich, kann man in den kationischen Verbindungen der Formel I das Anion An nach bekannter Art und Weise gegen ein anderes Anion austauschen.

Die neuen Verbindungen lassen sich aber auch direkt, nach Einengen des Reaktionsmediums, in eine flüssige Handelsform überführen. Verwendung finden die neuen kationischen Verbindungen der Formel I als Farbstoffe zum Färben und unter Zusatz von Binde- und gegebenenfalls Lösungsmitteln zum Bedrucken von mit kationischen Farbstoffen anfärbbaren Materialien, insbesondere Textilmaterialien die z. B. vorteilhaft aus Homo- oder Mischpolymerisaten des Acrylnitrils bestehen oder synthetische Polyamide oder Polyester, welche durch saure Gruppen modifiziert sind. Man färbt vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware wie Hemden oder Pullover.

Durch die Applikation der Farbstoffe lassen sich egale grünstichig bis rotstichig gelbe Färbungen bzw. Drucke herstellen, die sich durch sehr gute Allgemeinechtheiten auszeichnen.

Des weiteren können die neuen kationischen Farbstoffe auch zum Färben und Bedrucken von natürlichen und regenerierten Cellulosematerialien vor allem von Baumwolle und Viscose verwendet werden, wobei man ebenfalls grünstichig bis rotstichig gelbe farbstarke Ausfärbungen erhält. Die neuen Farbstoffe haben auf diesen Textilmaterialien ein gutes Ziehvermögen, einen guten Ausziehgrad und die erhaltenen Färbungen weisen sehr gute Echtheiten, vor allem Nassechtheiten auf.

Eine weitere Verwendung der neuen kationischen Farbstoffe der Formel I liegt in der Anwendung zum Färben von Papier aller Arten, vor allem von gebleichtem, ungeleimtem und geleimtem ligninfreiem Papier. Ganz besonders geeignet sind diese Verbindungen zum Färben von ungeleimtem Papier (Tissues) als Folge ihrer sehr hohen Affinität zu diesem Substrat.

Die neuen Verbindungen ziehen sehr gut auf diese Substrate auf, wobei die Abwasser farblos bleiben, was ein eminenter ökologischer Vorteil insbesondere im Hinblick auf die heutigen Abwasser-Gesetze ist.

Die erhaltenen Färbungen sind nassecht, d. h. sie zeigen keine Neigung zum Ausbluten, wenn gefärbtes Papier in nassem Zustand mit feuchtem weissem Papier in Berührung gebracht wird. Diese

Eigenschaft ist besonders für sogenannte « Tissues » erwünscht, bei denen vorhersehbar ist, dass das gefärbte Papier in nassem Zustand (z. B. getränkt mit Wasser, Alkohol, Tensid-Lösung etc...) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil und ermöglicht einen viel breiteren Einsatz dieses bekannten wirtschaftlichen Verfahrens.

Die neuen Farbstoffe können nach den verschiedensten Verfahren auf das Papiermaterial appliziert werden z. B. in der Massefärbung, in der Leimpresse und aus wässrigen Tinten nach der INK-JET Methode.

Schlussendlich können die neuen Farbstoffe noch zum Färben von Leder (durch z. B. Sprühen, Bürsten und Tauchen) verwendet werden und zur Bereitung von Tinten.

Aus der EP-A-38 299 sind bereits Farbstoffe mit ähnlicher Struktur bekannt. Diese weisen jedoch am Triazinring drei kationische Gruppen auf, während die erfindungsgemässen Farbstoffe nur eine oder zwei kationische Gruppen besitzen.

Die folgenden Beispiele veranschaulichen die Erfindung ohne sie darauf zu limitieren. Die Temperaturen sind in Grad Celsius angegeben. Teile (T) bedeuten Gewichtsteile und %-Angaben sind Gewichtsprozente.

## Beispiel 1

8 T 2,4-Di-(4'-aminophenylamino)-6-N-methyl-phenylaminotriazin und 8,0 T 1,3,3-Trimethyl-2-methylenindolin-ω-aldehyd werden in 45 T Wasser und 30 T Methanol verrührt. Man erwärmt das Gemisch während ca. 20 bis 30 Minuten auf 60-65° und beginnt gleichzeitig mit dem Zutropfen von 43,8 T 4 %iger wässeriger Salzsäure. Nach 2 Stunden ist das Zutropfen der Salzsäure beendet. Man rührt noch 1 Stunde bei gleicher Temperatur weiter, entfernt anschliessend das Methanol aus der Reaktionslösung durch abdestillieren im Vakuum. Der ausgefallene Farbstoff wird in 150 T Kaltwasser verrührt, abfiltriert, mit wenig Wasser gewaschen und bei 70° getrocknet. Man erhält 16,0 T eines gelben Farbstoffpulvers folgender Struktur :

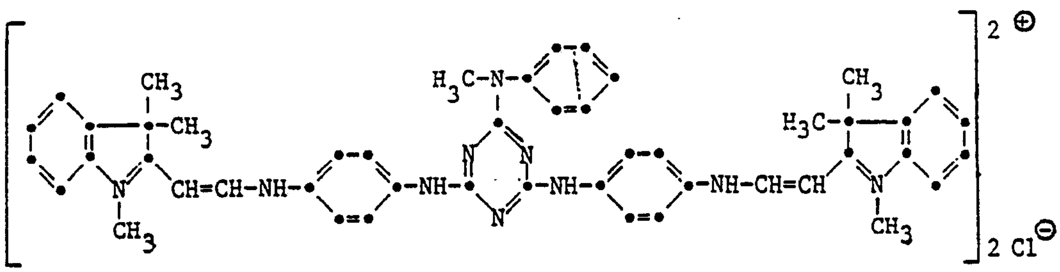

Verfährt man analog den obigen Angaben unter Verwendung der aus den Kolonnen II und III der folgenden Tabelle 1 ersichtlichen Komponenten, so erhält man Farbstoffe, die Papier in der in Kolonne IV angegebenen Nuance färben.

(Siehe Tabelle 1 Seite 8 ff.)

Tabelle 1

| I | II | III | | | IV |
|---|---|---|---|---|---|
| Beispiel | 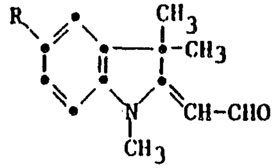 | 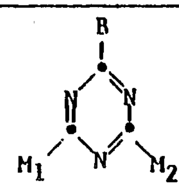 | | | Nuance auf Papier |
| | R | $M_1$ | $M_2$ | B | |
| 2 | H | 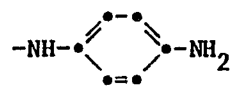 | 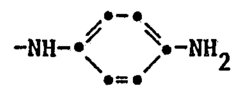 | 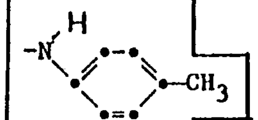 | gelb |
| 3 | Cl | 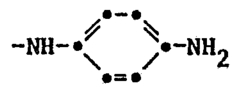 | 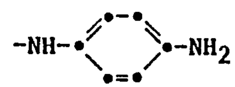 | 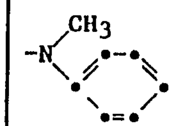 | goldgelb |
| 4 | H | 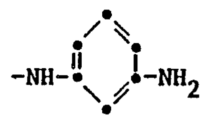 | 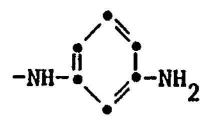 | 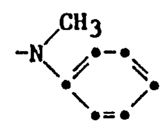 | grünstichig gelb |
| 5 | H | 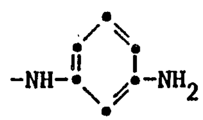 | 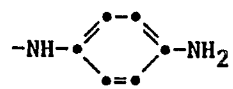 | 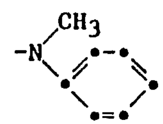 | gelb |
| 6 | H | 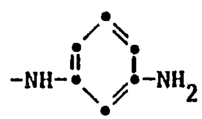 | 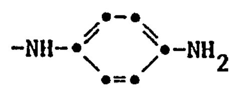 | 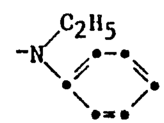 | gelb |

Tabelle 1 (Fortsetzung)

| I | II | III | | | IV |
|---|---|---|---|---|---|
| Beispiel | 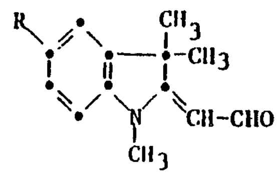 | 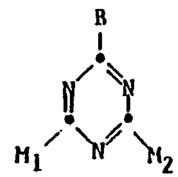 | | | Nuance auf Papier |
| | R | $M_1$ | $M_2$ | B | |
| 7 | H | 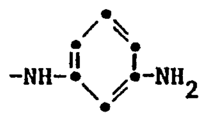 | 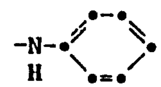 | 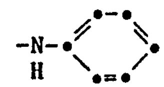 | gelb |
| 8 | Cl | 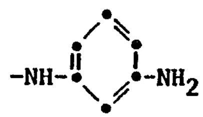 | 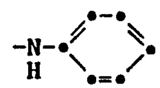 | 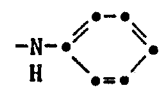 | gelb |
| 9 | H | 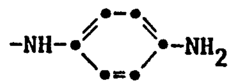 | 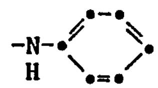 | 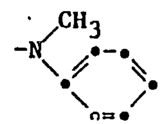 | gelb |
| 10 | H | 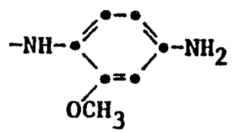 | 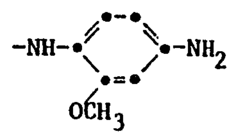 | 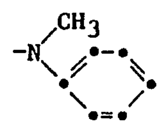 | goldgelb |
| 11 | H | 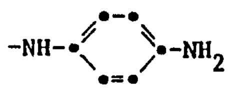 | 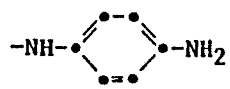 | 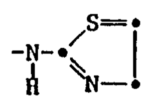 | gelb |

Beispiel 12

9,9 T 2,4-Di-(2'-methoxy-4'-aminophenylamino)-6-(4'-chlor-3'-aminophenylamino)-triazin und 8,0 T 1,3,3-Trimethyl-2-methylenindolin-w-aldehyd werden in 50 T Methanol und 2,6 T 85 %ige Ameisensäure während 10 Stunden bei 25-30° verrührt; anschliessend wird der Farbstoff durch abdestillieren des Methanols im Vakuum isoliert. Es werden 9,5 T kristallines oranges Farbstoffpulver folgender Struktur erhalten :

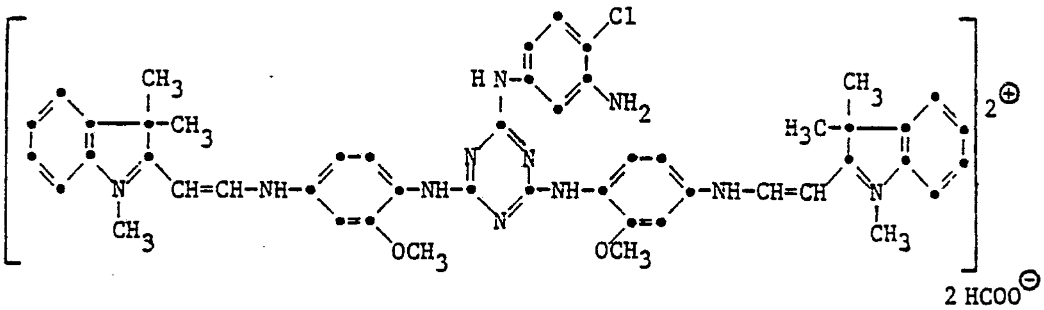

Verfährt man analog den obigen Angaben unter Verwendung der aus den Kolonnen II und III der folgenden Tabelle 2 ersichtlichen Komponenten, so erhält man Farbstoffe, die Papier in der in Kolonne IV angegebenen Nuance färben.

(Siehe Tabelle 2 Seite 11 ff.)

Tabelle 2

| I | II | III | | | IV |
|---|---|---|---|---|---|
| Beispiel | 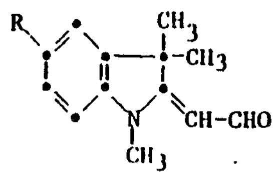 | 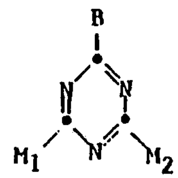 | | | Nuance auf Papier |
| | R | $M_1$ | $M_2$ | B | |
| 13 | H | 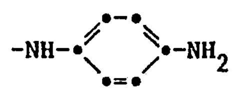 | 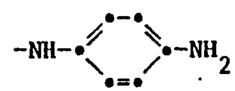 | 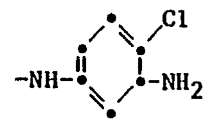 | gelb |
| 14 | H | 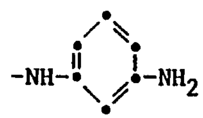 | 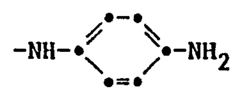 | 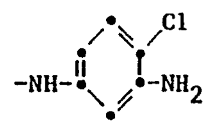 | grünstichig gelb |
| 15 | Cl | 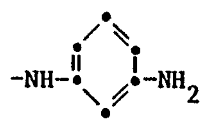 | 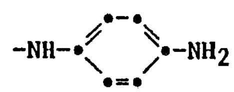 | 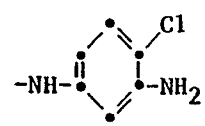 | grünstichig gelb |
| 16 | H | 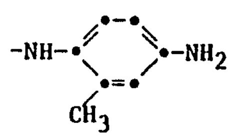 | 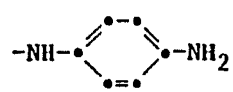 | 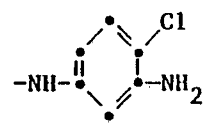 | gelb |

Tabelle 2 (Fortsetzung)

| I | II | III | | | IV |
|---|---|---|---|---|---|
| Beispiel | 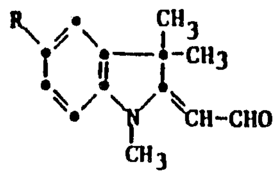 | 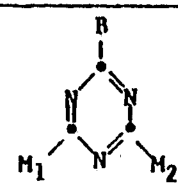 | | | Nuance auf Papier |
| | R | $M_1$ | $M_2$ | B | |
| 17 | H | 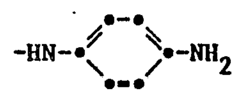 | 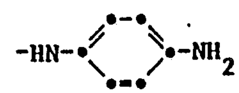 | 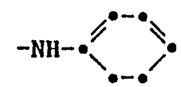 | gelb |
| 18 | H | 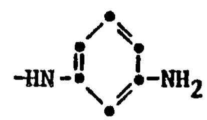 | 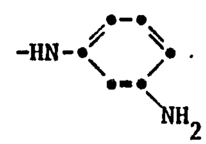 | dito | grünstichig gelb |
| 19 | H | 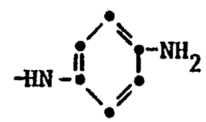 | 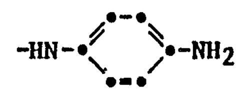 | 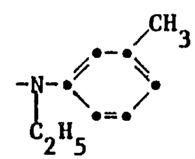 | gelb |
| 20 | H | 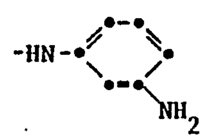 | 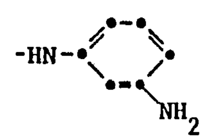 | 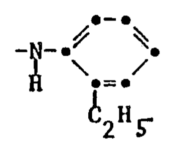 | grünstichig gelb |
| 21 | H | dito | dito | 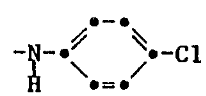 | dito |

Beispiel 22

9,4 T 2,4-Di-(4'-aminophenylamino)-6-(4'-N-chlortrimethylaminophenylamino)-triazin erhalten durch Umsetzen von 2,4-Di-(4'-nitro-phenylamino)-6-chlor-triazin mit 4-Amino-N,N-dimethylanilin, anschliessende Quaternierung mit Dimethylsulfat und Kat. Hydrierung der Nitrogruppen und 8,0 T 1,3,3-Trimethyl-2-methylenindolin-w-aldehyd werden in 60 T Methanol und 30 T Wasser verrührt. Man erwärmt das Gemisch auf 60-65 °C und beginnt gleichzeitig mit dem Zutropfen von 43,8 T. 4 %iger wässeriger Salzsäure. Nach 2 Stunden ist das Zutropfen der Salzsäure beendet. Man rührt noch eine Stunde bei gleicher Temperatur weiter, entfernt anschliessend das Methanol aus der Reaktionslösung durch abdestillieren im Vakum. Der zurückbleibende Farbstoff wird in 180 T Wasser bei 50 °C gelöst und durch Zugabe von 20 T Natriumchlorid gefällt. Durch abfiltrieren und trocknen erhält man 18 T eines gelben Farbstoffpulvers folgender Sturktur :

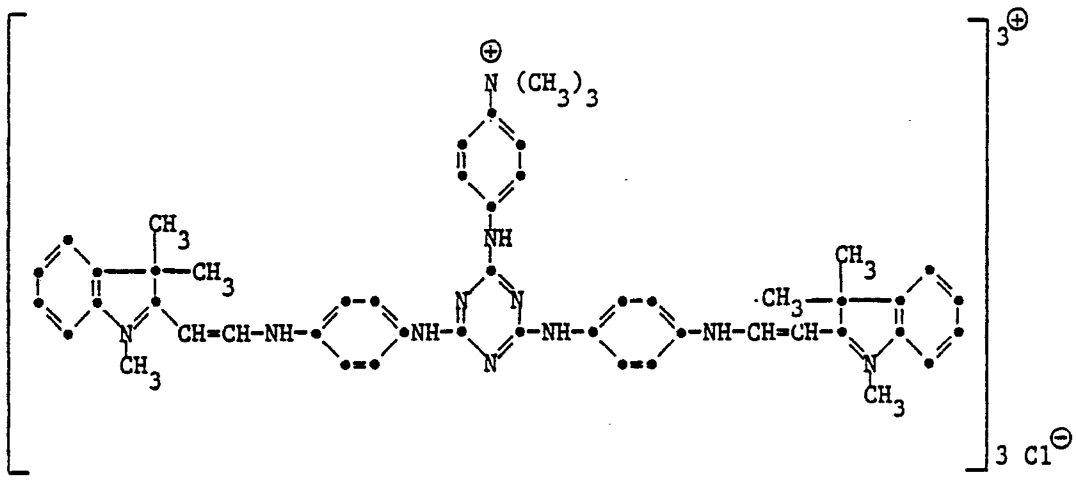

Beispiel 23

Man vermischt 50 T chemisch gebleichte Buche-Sulfit mit 50 T gebleichtem RKN 15 (Mahlgrad 22° SR) und 2 T des Farbstoffes gemäss Beispiel 1 in Wasser (pH 6, Wasserhärte 10° dH, Temperatur 20°, Flottenverhältnis 1 : 40). Nach 15 minütigem Rühren werden Papierblätter auf einem Frank-Blattbildner hergestellt.

Das Papier ist in einer sehr intensiven Gelbnuance gefärbt. Das Abwasser ist farblos. Der Ausziehgrad erreicht praktisch 100 %. Die Licht- und Nassechtheiten sind ausgezeichnet.

Beispiel 24

Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5 %ige Färbung, Flottenverhältnis 1 : 400, Wasserhärte 10° dH, pH 6, Temperatur 20°).

Es entsteht auf der Papierbahn eine farbstarke Gelbnuance von mittlerer Intensität. Das Abwasser ist farblos.

Beispiel 25

10 T Baumwollgewebe (gebleichte mercerisierte Baumwolle) werden in einem Labor-Baumfärbeapparat in 200 T einer Flotte (Wasserhärte 10° dH, pH 4, 3 Umwälzungen der Färbeflotte pro Minute), die 0,05 T des Farbstoffes gemäss Beispiellenthält, gefärbt. Die Temperatur wird in 60 Minuten von 20° auf 100° aufgeheizt, dann während 15 Minuten konstant gehalten.

Die Färbeflotte ist völlig ausgezogen. Es entsteht auf dem Baumwollgewebe eine farbstarke gelbe Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material mit dem Farbstoff des Beispiels 1 eine farbstarke gelbe Färbung, die eine gute Lichtechtheit und sehr gute Nassechtheit bezitzt.

## Patentansprüche

1. Kationische Verbindungen der Formel I

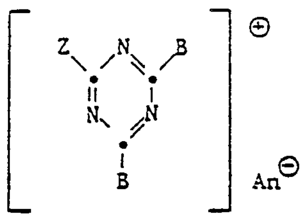

(I)

worin bedeuten Z einen Rest der Formel

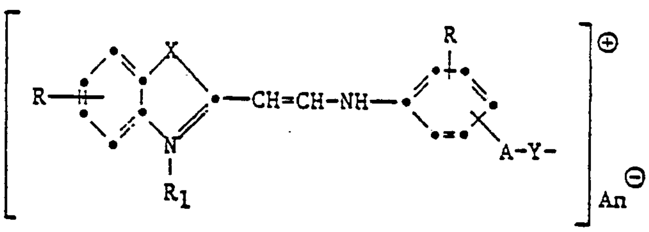

eines der beiden B entweder die Bedeutung von Z oder einen nichtkationischen Rest der Formel

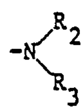

und das andere der beiden B einen identischen oder verschiedenen nichtkationischen Rest der Formel

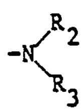

R unabhängig voneinander Wasserstoff, gegebenenfalls substituiertes $C_1$-$C_4$-Alkyl, gegebenenfalls substituiertes $C_1$-$C_4$-Alkoxy, die $NO_2$-Gruppe, gegebenenfalls substituiertes Acylamino, Halogen oder die CN-Gruppe ;

X ein Schwefelatom oder die Gruppe

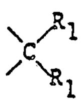,

wobei beide Reste $R_1$ auch miteinander zu einem carbocyclischen 5- oder 6-Ring verknüpft sein können ;

A die direkte Bindung, —NH—alkylen ($C_1$-$C_4$), —O—alkylen ($C_1$-$C_4$), Alkylen ($C_1$-$C_4$), Phenylen, —O—phenylen oder —NH—phenylen ;

Y —NH—, —$NR_1$—, —O— oder —S— ;

$R_1$ unabhängig voneinander gegebenenfalls substituiertes $C_1$-$C_4$-Alkyl oder $C_3$-$C_4$-Alkenyl ;

$R_2$ einen gegebenenfalls substituierten Arylrest oder einen gegebenenfalls substituierten Heterocyclus,

$R_3$ Wasserstoff, einen gegebenenfalls substituierten $C_1$-$C_6$-Alkylrest oder einen gegebenenfalls substituierten $C_1$-$C_6$-Alkenylrest, und

An ein Anion.

2. Kationische Verbindungen der Formel I gemäss Anspruch 1, dadurch gekennzeichnet, dass eines der beiden B die Bedeutung von Z hat.

3. Kationische Verbindungen der Formel I gemäss Anspruch 1, dadurch gekennzeichnet, dass R Wasserstoff, $CH_3$, $OCH_3$ oder Chlor bedeutet.

4. Kationische Verbindungen der Formel I gemäss Anspruch 1, dadurch gekennzeichnet, dass $R_1$ unsubstituiertes, unverzweigtes $C_1$-$C_4$-Alkyl bedeutet.

5. Kationische Verbindungen gemäss Anspruch 4, dadurch gekennzeichnet, dass $R_1$ die $CH_3$-Gruppe bedeutet.

6. Kationische Verbindungen gemäss Anspruch 1, dadurch gekennzeichnet, dass X die

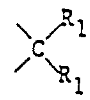

Gruppe darstellt.

7. Kationische Verbindungen gemäss Anspruch 6, dadurch gekennzeichnet, dass X die $>C(CH_3)_2$ Gruppe darstellt.

8. Kationische Verbindungen gemäss Anspruch 1, dadurch gekennzeichnet, dass A in m- oder p-Stellung zur —CH = CH—NH-Brücke gebunden ist.

9. Kationische Verbindungen gemäss Anspruch 1, dadurch gekennzeichnet, dass A die direkte Bindung oder —O—Phenylen- oder —NH—Phenylen darstellt.

10. Kationische Verbindungen gemäss Anspruch 1, dadurch gekennzeichent, dass Y die —NH— oder —$NR_1$-Gruppe darstellt.

11. Kationische Verbindungen gemäss Anspruch 10, dadurch gekennzeichnet, dass Y die —N · $CH_3$-Gruppe bedeutet.

12. Kationische Verbindungen gemäss Anspruch 1, dadurch gekennzeichnet, dass $R_2$ Phenyl bedeutet.

13. Kationische Verbindungen gemäss Anspruch 1, dadurch gekennzeichnet, dass $R_3$ $C_1$-$C_4$-Alkyl bedeutet.

14. Kationische Verbindungen gemäss Anspruch 13, dadurch gekennzeichnet, dass $R_3$ $CH_3$ bedeutet.

15. Verfahren zur Herstellung von kationischen Verbindungen der Formel I gemäss Anspruch 1, dadurch gekennzeichnet, dass man

a) im Falle, wenn ein B die Bedeutung von Z hat, 1 Mol eines Diamins der Formel II

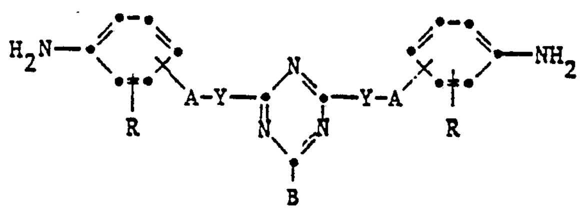

(II)

mit 2 Mol einer Aldehydverbindung der Formel III

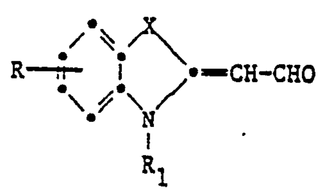

(III)

in Gegenwart einer Säure HAn kondensiert, oder

b) im Falle, wenn beide B die Bedeutung der Formel

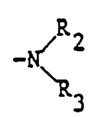

darstellen, dass man eine Verbindung der Formel

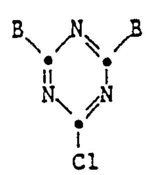

(IV)

mit einer Verbindung der Formel

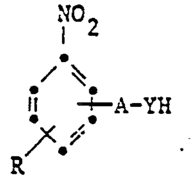

(V)

zu einer Verbindung der Formel

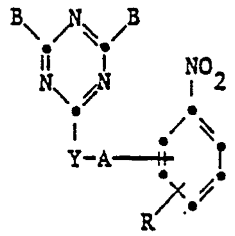

(VI)

umsetzt, anschliessend die $NO_2$-Gruppe zur $NH_2$-Gruppe reduziert und mit 1 Mol einer Aldehydverbindung der Formel III in Gegenwart einer Säure HAn kondensiert, wobei die Symbole R, A, Y, B, $R_1$ und X gleich oder voneinander verschieden sein können und die unter Formel I in Anspruch 1 angegebene Bedeutung haben.

16. Verwendung der kationischen Verbindungen der Formel I gemäss Anspruch 1 oder der gemäss Anspruch 15 erhaltenen kationischen Verbindungen als Farbstoffe zum Färben und Bedrucken von Textilmaterialien, Leder und Papier aller Arten.

17. Verwendung gemäss Anspruch 16, zum Färben und Bedrucken von Polyacrylnitrilmaterialien oder sauer modifizierten Polyester- oder Polyamidmaterialien, sowie natürlichen und regenerierten Cellulosematerialien.

18. Verwendung gemäss Anspruch 16 zum Färben und Bedrucken von ligninfreiem, gebleichtem und ungeleimtem Papier.

19. Die mit den kationischen Verbindungen gemäss Anspruch 1 behandelten, bzw. gefärbten und bedruckten Materialien.

**Claims**

1. A cationic compound of the formula I

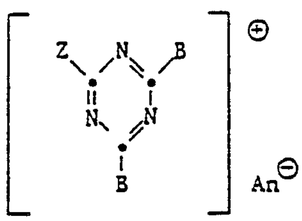

(I)

in which Z is a radical of the formula

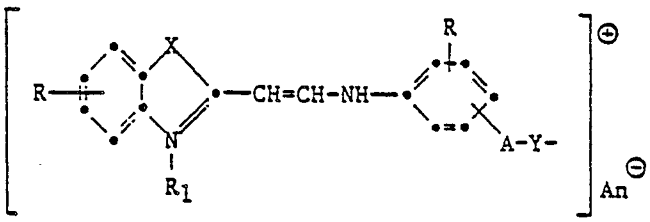

one of the two B symbols either has the meaning of Z or is a non-cationic radical of the formula

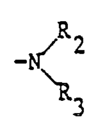

and the other of the two B symbols is an identical or different non-cationic radical of the formula

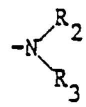

R independently of one another are each hydrogen, unsubstituted or substituted $C_1$-$C_4$alkyl, unsubstituted or substituted $C_1$-$C_4$alkoxy, the $NO_2$ group, unsubstituted or substituted acylamino, halogen or the CN group,

X is a sulfur atom or the group

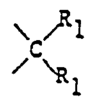

in which both $R_1$ radicals can also be linked together to form a carbocyclic 5- or 6-membered ring,

A is the direct bond, —NH—alkylene-($C_1$-$C_4$), —O—alkylene-($C_1$-$C_4$), alkylene-($C_1$-$C_4$), phenylene, —O—phenylene or —NH-phenylene,

Y is —NH—, —$NR_1$—, —O— or —S—,

$R_1$ independently of one another are each unsubstituted or substituted $C_1$-$C_4$alkyl or $C_3$-$C_4$alkenyl,

$R_2$ is an unsubstituted or substituted aryl radical or an unsubstituted or substituted heterocycle,

$R_3$ is hydrogen, an unsubstituted or substituted $C_1$-$C_6$alkyl radical or an unsubstituted or substituted $C_1$-$C_6$alkenyl radical, and

An is an anion.

2. A cationic compound of the formula I according to claim 1, wherein one of the two B symbols has the meaning of Z.

3. A cationic compound of the formula I according to claim 1, wherein R is hydrogen, $CH_3$, $OCH_3$ or chlorine.

4. A cationic compound of the formula I according to claim 1, wherein $R_1$ is unsubstituted, straight-chain $C_1$-$C_4$alkyl.

5. A cationic compound according to claim 4, wherein $R_1$ is the $CH_3$ group.

6. A cationic compound according to claim 1, wherein X is the

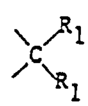

group.

7. A cationic compound according to claim 6, wherein X is the $>C(CH_3)_2$ group.

8. A cationic compound according to claim 1, wherein A is bound in the m- or p-position with respect to the —CH = CH—NH bridge.

9. A cationic compound according to claim 1, wherein A is the direct bond, —O—phenylene or —NH—phenylene.

10. A cationic compound according to claim 1, wherein Y is the —NH group or —$NR_1$ group.

11. A cationic compound according to claim 10, wherein Y is the —N · $CH_3$ group.

12. A cationic compound according to claim 1, wherein $R_2$ is phenyl.

13. A cationic compound according to claim 1, wherein $R_3$ is $C_1$-$C_4$alkyl.

14. A cationic compound according to claim 13, wherein $R_3$ is $CH_3$.

15. A process for producing a cationic compound of the formula I according to claim 1, which process comprises

a) condensing, in the case where one B symbol has the meaning of Z, 1 mol of a diamine of the formula II

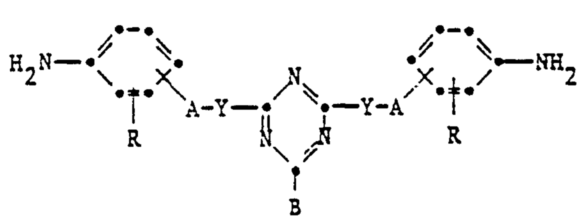

(II)

with 2 mol of an aldehyde compound of the formula III

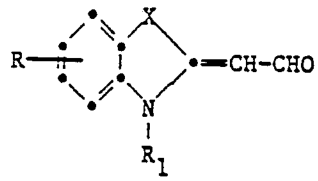

(III)

in the presence of an acid HAn, or

b) reacting, in the case where both B symbols have the meaning of the formula

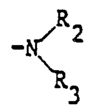

a compound of the formula

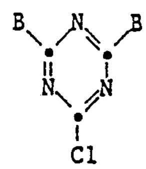

(IV)

with a compound of the formula

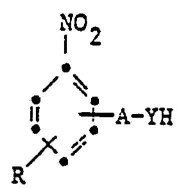

(V)

to give a compound of the formula

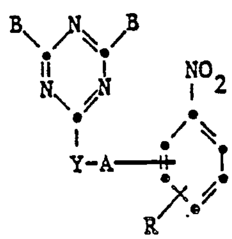

(VI)

subsequently reducing the $NO_2$ group to the $NH_2$ group and subjecting the resulting product to a condensation reaction with 1 mol of an aldehyde compound of the formula III in the presence of an acid HAn, the symbols R, A, Y, B, $R_1$ and X being identical or different from one another and having the meanings defined under formula I in claim 1.

16. The use of a cationic compound of the formula I according to claim 1, or of a cationic compound obtained according to claim 15, as a dye for dyeing and printing textile materials, leather and paper of all types.

17. The use according to claim 16 for dyeing and printing polyacrylonitrile materials, or polyester polyamide materials modified with acid groups, as well as natural and regenerated cellulose materials.

18. The use according to claim 16 for dyeing and printing lignin-free, bleached and unsized paper.

19. The materials treated or dyed and printed with a cationic compound according to claim 1.

## Revendications

1. Composés cationiques de formule 1 :

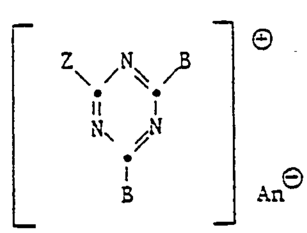

(I)

dans laquelle Z est un reste de formule :

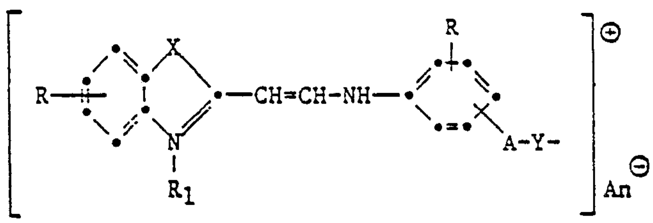

un des deux B a la même signification que Z ou est un reste non cationique de formule —$N(R_2)R_3$, et l'autre des deux B est un reste non cationique, identique ou différent, de formule —$N(R_2)R_3$,

les R sont, indépendamment l'un de l'autre, un hydrogène, un alkyle en $C_1$-$C_4$ éventuellement substitué, un alcoxy en $C_1$-$C_4$ éventuellement substitué, un $NO_2$, un acylamino éventuellement substitué, un halogène ou un CN,

X est un atome de soufre ou le groupement $>C(R_1)_2$, où les deux restes $R_1$ peuvent aussi être reliés l'un à l'autre en un noyau carbocyclique à 5 ou 6 chaînons,

A est une liaison directe, un —NH—alkylène en $C_1$-$C_4$, un —O—alkylène en $C_1$-$C_4$, un alkylène en $C_1$-$C_4$, un phénylène, un —O—phénylène ou un —NH—phénylène,

Y est —NH—, —$NR_1$—, —O— ou —S—,

$R_1$ est, indépendamment dans chaque cas, un alkyle en $C_1$-$C_4$ ou alcényle en $C_3$-$C_4$, éventuellement substitué,

$R_2$ est un reste aryle éventuellement substitué ou un hétérocycle éventuellement substitué.

$R_3$ est un hydrogène, un reste alkyle en $C_1$-$C_6$ éventuellement substitué ou un reste alcényle en $C_2$-$C_6$ éventuellement substitué et

An est un anion.

2. Composés cationiques de formule I d'après la revendication 1, caractérisés en ce que l'un des deux B a la même signification que Z.

3. Composés cationiques de formule 1 d'après la revendication 1, caractérisés en ce que R représente un hydrogéne, un $CH_3$, un $OCH_3$ ou un chlore.

4. Composés cationiques de formule 1 d'après la revendication 1, caractérisés en ce que $R_1$ représente un alkyle en $C_1$-$C_4$ non substitué et non ramifié.

5. Composés cationiques d'après la revendication 4, caractérisés en ce que $R_1$ représente le groupement $CH_3$.

6. Composés cationiques d'après la revendication 1, caractérisés en ce que X représente le groupement $>C(R_1)_2$.

7. Composés cationiques d'après la revendication 6, caractérisés en ce que X représente le groupement $>C(CH_3)_2$.

8. Composés cationiques d'après la revendication 1, caractérisés en ce que A est lié en position méta ou para par rapport au pont —CH—CH—NH—.

9. Composés cationiques d'après la revendication 1, caractérisés en ce que A représente la liaison directe, un —O—phénylène ou un —NH—phénylène.

10. Composés cationiques d'après la revendication 1, caractérisés en ce que Y représente le groupe —NH— ou —$NR_1$—.

11. Composés cationiques d'après la revendication 10, caractérisés en ce que Y représente le groupe —$N \cdot CH_3$—.

12. Composés cationiques d'après la revendication 1, caractérisés en ce que $R_2$ représente un phényle.

13. Composés cationiques d'après la revendication 1, caractérisés en ce que $R_3$ représente un alkyle en $C_1$-$C_4$.

14. Composés cationiques d'après la revendication 13, caractérisés en ce que $R_3$ représente un $CH_3$.

15. Procédé de préparation des composés cationiques de formule I selon la revendication 1, caractérisé en ce que :

a) dans le cas où un B a la même signification que Z, on condense en présence d'un acide HAn 1 mole d'une diamine de formule II :

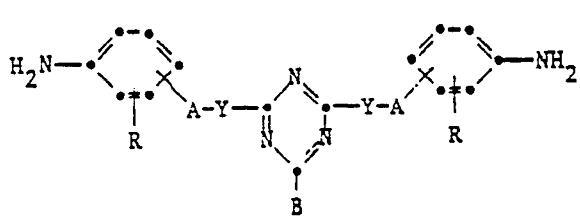

(II)

avec 2 moles d'un composé aldéhyde de formule III ;

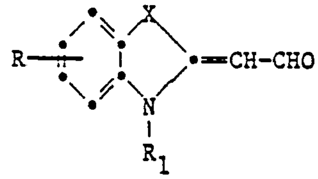

(III)

ou b) dans le cas où les deux B présentent la formule $—N(R_2)R_3$, on fait réagir un composé de formule IV :

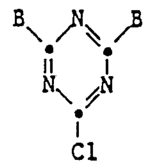

(IV)

avec un composé de formule V :

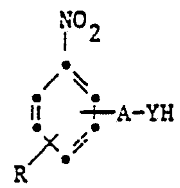

(V)

pour obtenir un composé de formule VI :

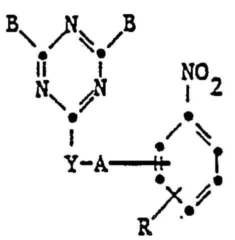

(VI)

puis on réduit le groupement $NO_2$ en groupement $NH_2$ et on condense avec 1 mole d'un composé aldéhyde de formule III en présence d'un acide HAn, les symboles R, A, Y, B, $R_1$ et X pouvant être identiques ou différents les uns des autres et ayant les significations indiquées à propos de la formule 1 dans la revendication 1.

16. Utilisation des composés cationiques de formule I selon la revendication 1 ou des composés cationiques obtenus selon la revendication 15 comme colorants pour la teinture et l'impression de matériaux textiles de cuir et de papier de toutes sortes.

17. Utilisation selon la revendication 16 pour la teinture et l'impression de matériaux polyacrylonitrile ou de matériaux polyester ou polyamide modifiés par des groupes acides, ainsi que de matériaux de cellulose naturelle ou régénérée.

18. Utilisation selon la revendication 16 à la teinture et à l'impression de papier sans lignine, blanchi et non collé.

19. Les matériaux traités, respectivement teints et imprimés, à l'aide des composés cationiques selon la revendication 1.